# EUROPEAN PATENT SPECIFICATION

(11) **EP 2 321 448 B1**
(45) Date of publication and mention of the grant of the patent: **19.09.2012**
(21) Application number: 09781139.2
(22) Date of filing: 27.07.2009
(51) Int. Cl.: C25B 9/06, C25B 15/00, C25B 1/04

(54) **ELECTROLYTIC COMBUSTIBLE GAS-PRODUCING APPARATUS**
BRENNBARES GAS ERZEUGENDE ELEKTROLYTISCHE VORRICHTUNG
APPAREIL ÉLECTROLYTIQUE DE PRODUCTION DE GAZ COMBUSTIBLE

(30) Priority: 06.08.2008 ES 200802362
(43) Date of publication of application: 18.05.2011
(73) Proprietor: José Antonio, Martinez Cao, 03205 Alicante (ES)
(72) Inventor: José Antonio, Martinez Cao, 03205 Alicante (ES)
(74) Representative: Temino Ceniceros, Ignacio
(86) International application number: PCT/EP2009/059682
(87) International publication number: WO 2010/015542

(56) References cited:
- FR-A- 2 723 593
- US-A- 5 082 544
- US-A1- 2004 203 166

## Description

### OBJECT OF THE INVENTION

The present invention belongs to the field of apparatus aimed at producing combustible gases by means of the electrolysis process.

The object of the invention consist of the development of a compact apparatus, easy to install, which by means of a design solution allows optimal dissipation of the heat produced during an electrochemical reaction, eliminating the need to increase the size of the unit and allowing an increase in intensities.

### BACKGROUND OF THE INVENTION

Electrolysis apparatus are known to be used in several and varied applications, specifically those used, for example, in the electrolysis of water as a clean technology for the production of hydrogen gas that is subsequently used as fuel.

In the electrolysis process, water is dissociated in the cathode with the formation of hydrogen molecules and oxygen ions which are transported through the electrolyte, forming oxygen molecules on the surface of the anode with electron detachment. In order for these electrons to be transported from the anode to the cathode, to produce the electrolytic reaction, electrical energy must be applied.

The electrochemical reaction produced inside the unit gives off heat, reaching excessive temperatures in some units.

Most known systems are closed and the gas-producing units are submerged in water in closed tanks, due to which the high temperatures reached represent a problem that requires reducing the intensities or building larger and more expensive systems.

### DESCRIPTION OF THE INVENTION

The electrolytic combustible gas-producing apparatus that constitutes the object of this invention satisfactorily solves the previously expounded problems.

This gas-producing apparatus is configured by separate tanks, which consist of a first tank wherethrough water enters and a second tank wherethrough hydrogen gas and oxygen gas resulting from the electrolysis exit, mixed with the circulating water, and by at least one outer pipe that connects both tanks, slightly penetrating both by its extremities and which is connected to a first electrical terminal and by an inner core connected to a second electrical terminal of opposing polarity to that of the first terminal.

The apparatus basically stands out because the outer surface of the pipe is in contact with the air or with the intermediation of flaps that facilitate dissipation of the heat generated during the electrolysis and therefore cooling of the apparatus.

As described above, the core is disposed inside each pipe and may consist of one or more internal pipes, rods or strips that end in both tanks by their extremities.

In order to maximise cooling, the apparatus may include an electric fan or similar that will facilitate heat extraction.

The apparatus thus configured therefore consists of an open system that works in continuous mode and has an optimal working temperature which does not require lowering the intensity; as opposed to the case of the two currently known closed systems. The same working intensity to that used in conventional systems leads to higher productions using this apparatus.

The degree of cooling obtained as a consequence of this configuration determines that the size of the unit is smaller to that of other units, the configuration of which does not allow suitable cooling, thereby achieving a reduction in the space occupied.

In accordance with this apparatus structure, the number, size, shape and location of the pipes may be modified, in addition to the shape of the tanks in order to obtain different designs having the suitable volume for the space where it will disposed, thereby allowing easy installation.

The apparatus functions in the following manner: water is continuously introduced into the first tank; next, said water is directed through the pipes at the same time that the terminals are subjected to a current, whereupon the electrochemical reaction that gives rise to the formation of hydrogen gas and oxygen gas takes place. The gas is transported towards the second tank dissolved in the water, wherefrom it exits for the subsequent use thereof as fuel. The heat generated during the electrochemical reaction is dissipated in an optimal manner through the pipes in contact with the air.

The apparatus is thus constantly fed with water which exits in the form of gas, thereby preventing the water from stagnating, therefore favouring the continuous production of gas.

The applications of this apparatus are multiple, highlighting its use for feeding hydrogen batteries, for example, for combustion engines,..., without ruling out other uses in industry, housing and others.

The apparatus may be composed of stainless steel, aluminium, titanium or a combination of both, in carbon fibre, plastic or any other suitable material.

The gas-producing apparatus may be housed within a conventional facility that includes an independent main tank. In this case, the main tank is connected to the entrance of the first tank of the apparatus to which it supplies water by means of a sleeve, with the possible intermediation of a pump that forces the water to circulate towards the apparatus. Another sleeve connected to the exit of the second tank of the apparatus returns the gases produced therein to the main tank, where they are mixed with the water to favour the removal of impurities produced during electrolysis, whereupon the clean gas finally exits the main tank.

### DESCRIPTION OF THE DRAWINGS

In order to complement this description and with the object of helping to better understand the characteristics of the invention, a set of drawings, in accordance with a preferred example of practical embodiment thereof, has been included as an integral part of said description, wherein the following has been represented in an illustrative and non-limiting manner:
Figure 1 shows a schematic view of a first embodiment of the electrolytic combustible gas-producing apparatus having a single pipe with dissipating flaps.
Figure 2 shows a schematic view of a first embodiment of the electrolytic combustible gas-producing apparatus having several pipes wherein the core included in each pipe is another pipe of smaller diameter.
Figure 3 shows a schematic view of a second embodiment of the apparatus having several pipes, wherein the core is formed of several strips.

### PREFERRED EMBODIMENT OF THE INVENTION

Based on the figures, a series of possible embodiments of the electrolytic combustible gas-producing apparatus that is the object of this invention is described below in detail.

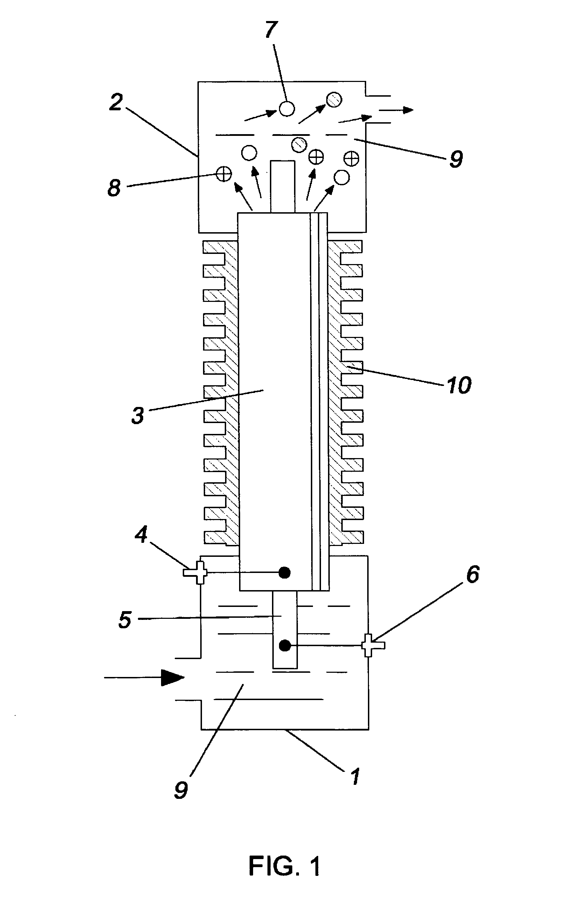

In accordance with that represented in figure 1, the combustible gas-producing apparatus comprises a first tank (1) wherethrough water enters (9) and a second tank (2) wherethrough hydrogen gas (7) and oxygen gas (8) resulting from the electrolysis exits mixed with circulating water (9), in addition to comprising a pipe (3) that communicates both tanks (1, 2), slightly penetrating said tanks (1, 2) by its extremities, which is connected to a first electrical terminal (4), and having a core (5) disposed inside the outer pipe (3) which ends in both tanks (1, 2) by its extremities, consisting of a pipe (5) that is connected to a second electrical terminal (6) of opposing polarity to that of the first terminal (4).

As we can observe in this figure 1, the pipe (3) is in contact with the air with the intermediation of dissipating flaps (10) that facilitate the dissipation of the heat generated during electrolysis.

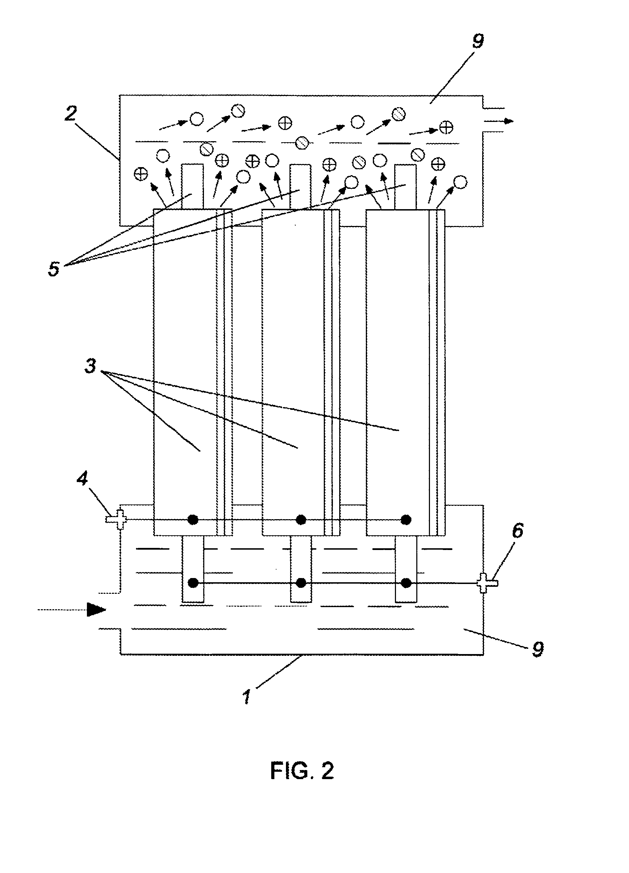

In figure 2, we can observe a second embodiment with the same structure to that represented in figure 1, wherein three independent pipes (3) are now disposed, without superficial continuity therebetween, wherein the corresponding cores (5) consisting of pipes (5) are disposed, wherein the pipes (5) are connected to the second terminal (6).

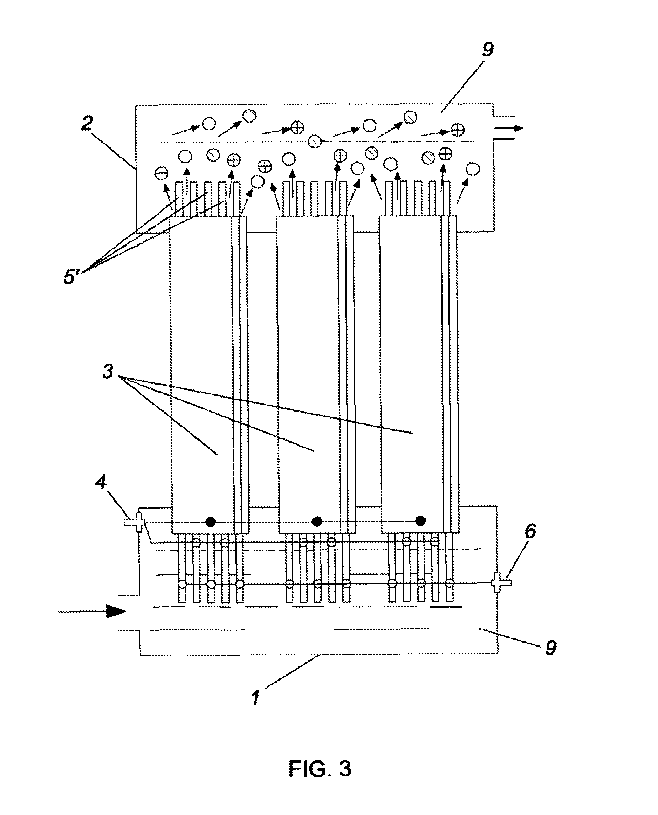

In figure 3, we can observe another embodiment wherein, as opposed to that represented in figure 2, the core (5') inside of the pipes (3) consists of a group of strips (5').

In any of the apparatus represented in figures 2 and 3, it is envisaged that the pipes (3) will be separated and with their outer surface in direct contact with the air, so as to maximise dissipation of the heat generated in the electrolysis and therefore cooling of the apparatus. In figure 1 we can observe that the direct contact with the air is established by means of the flaps (10) surrounding the outer surface of the pipe (3).

## Claims

1. Electrolytic combustible gas-producing apparatus, **characterised by** comprising:
a first tank (1) wherethrough a continuous flow of water (9) enters and a second tank (2) wherethrough a continuous flow of water (9) mixed with hydrogen gas (7) and oxygen gas (8) resulting from the electrolysis exits,
at least one pipe (3) that communicates both tanks (1, 2), slightly penetrating said tanks (1, 2) by its extremities, and which is connected to an electrical terminal (4), and
at least one core (5, 5') disposed inside the pipe (3) which ends in both tanks (1, 2) by its extremities and which is connected to a second electrical terminal (6) of opposing polarity to that of the first terminal (4),
wherein the outer surface of the pipe (3) is in direct contact with the air or through the intermediation of dissipating flaps (10) to facilitate the dissipation of the heat generated during electrolysis.

2. Electrolytic combustible gas-producing apparatus according to claim 1, which comprises a plurality of pipes (3) connected to one first tank (1) and to one second tank (2).

3. Electrolytic combustible gas-producing apparatus according to any of the previous claims, wherein the core (5, 5') comprises one or more pipes or rods (5') or strips (5).

4. Electrolytic combustible gas-producing apparatus according to any of claims 1-2, which also comprises a fan oriented towards the pipes (3).

## Patentansprüche

1. Brennbares Gas erzeugende elektrolytische Vorrichtung, **dadurch gekennzeichnet, dass** sie Folgendes umfasst:
einen ersten Tank (1), durch den ein ununterbrochener Wasserfluss (9) eintritt, und einen zweiten Tank (2), durch den ein unterbrochener Wasserfluss (9) gemischt mit Wasserstoffgas (7) und Sauerstoffgas (8), die aus der Elektrolyse stammen, austreten,
mindestens ein Rohr (3), das beide Tanks (1, 2) miteinander verbindet, das geringfügig in die Tanks (1, 2) durch seine Enden eintritt, und das mit einer elektrischen Klemme (4) verbunden ist, und
mindestens einen Kern (5, 5'), der im Inneren des Rohrs (3) angebracht ist, der in beide Tanks (1, 2) durch seine Enden mündet, und der mit einer zweiten elektrischen Klemme (6) mit entgegen gesetzter Polarität zu derjenigen der ersten Klemme (4) verbunden ist,
wobei die Außenfläche des Rohrs (3) in direktem Kontakt mit der Luft oder durch die Vermittlung von Ableitungsklappen (10) steht, um die Ableitung von Hitze zu erleichtern, die während der Elektrolyse erzeugt wird.

2. Brennbares Gas erzeugende elektrolytische Vorrichtung nach Anspruch 1, umfassend eine Vielzahl von Rohren (3), die mit einem ersten Tank (1) und mit einem zweiten Tank (2) verbunden sind.

3. Brennbares Gas erzeugende elektrolytische Vorrichtung nach einem der vorhergehenden Ansprüche, wobei der Kern (5, 5') ein oder mehrere Rohre oder Stangen (5') oder Streifen (5) umfasst.

4. Brennbares Gas erzeugende elektrolytische Vorrichtung nach einem der Ansprüche 1-2, das auch einen Ventilator umfasst, der auf die Rohre (3) hin ausgerichtet ist.

## Revendications

1. Appareil de production de gazes combustibles par électrolyse **caractérisé en ce qu'**il comprend:
un premier réservoir (1) à travers lequel rentre un flux continu d'eau (9) et un deuxième réservoir (2) à travers lequel sort un flux continu d'eau (9) mélangé à de l'azote (7) et de l'oxygène (8) résultant de l'électrolyse,
au moins un tube (3) qui communique les deux dépôts (1, 2) en pénétrant légèrement dans les deux dépôts (1, 2) par leurs extrémités et qui est connecté à un primer terminal électrique (4), et
au moins un noyau (5, 5') agencé à l'intérieur du tube (3) qui débouche sur les deux réservoirs (1, 2) par leurs extrémités et qui est connecté à un deuxième terminal électrique (6) avec une polarité opposée à celle du premier terminal (4)
dans lequel la surface externe du tube (3) est en contact direct avec l'air ou à travers des ailettes de dissipation (10) pour permettre la dissipation de la chaleur générée pendant l'électrolyse.

2. Appareil de production de gazes combustibles par électrolyse selon la revendication 1, qui comprend de nombreux tubes (3) connectés à un premier réservoir (1) et à un deuxième réservoir (2).

3. Appareil de production de gazes combustibles par électrolyse selon l'une quelconque des revendications précédentes dans lequel le noyau (5, 5') comprend un ou plusieurs tubes ou tiges (5') ou bandes (5).

4. Appareil de production de gazes combustibles par électrolyse selon l'une quelconque des revendications 1-2, qui comprend également un ventilateur orienté vers les tubes (3).
